# EUROPÄISCHE PATENTANMELDUNG

(11) **EP 4 672 534 A1**
(43) Veröffentlichungstag der Anmeldung: **31.12.2025**
(21) Anmeldenummer: 25183522.9
(22) Anmeldetag: 18.06.2025
(51) Int. Cl.: H02J 1/10, B60L 58/18, B63G 8/08, H01M 10/613, H02J 7/00, B60L 50/61, B63G 8/00, H02J 1/00, H02J 15/00

(54) **VERFAHREN ZUM BETREIBEN EINES ENERGIESPEICHERS IN EINEM UNTERSEEBOOT OHNE AKTIVE KÜHLUNG**

(30) Priorität: 28.06.2024 DE 102024118306
(71) Anmelder: TKMS GmbH, 24143 Kiel (DE); thyssenkrupp AG, 45143 Essen (DE)
(72) Erfinder: Lundius, Niclas, 23569 Lübeck (DE); Jedtberg, Holger, 24247 Mielkendorf (DE)
(74) Vertreter: thyssenkrupp Intellectual Property GmbH

(57) **Zusammenfassung**

Die vorliegende Erfindung betrifft ein Verfahren zum Betreiben eines Unterseebootes 10, wobei das Unterseeboot 10 ein Bordnetz 20 aufweist, wobei das Bordnetz 20 eine Maximalnetzleistung aufweist, wobei das Unterseeboot 10 4 bis 400 Energiespeichervorrichtungen 30 aufweist, wobei jede Energiespeichervorrichtung 30 über jeweils einen Gleichspannungswandler 40 elektrisch trennbar mit dem Bordnetz 20 verbunden ist, wobei jede Energiespeichervorrichtung 30 eine Maximalspeicherleistung aufweist, wobei jede Energiespeichervorrichtung 30 eine Maximalspeicherkapazität aufweist, wobei das Unterseeboot 10 eine Kühlvorrichtung 50 für die Energiespeichervorrichtungen 30 und/oder die Gleichspannungswandler 40 aufweist, wobei das Verfahren einen Regelbetrieb und einen Sekundärbetrieb aufweist, wobei der Sekundärbetrieb erfolgt, wenn die Kühlvorrichtung 50 ausgefallen oder abgeschaltet ist, wobei das Verfahren im Sekundärbetrieb die Leistung der Energiespeichervorrichtungen 30 auf maximal 60 % der Maximalspeicherleistung begrenzt, wobei das Verfahren im Sekundärbetrieb die maximale Entladung jeder Energiespeichervorrichtung 30 auf maximal 10 % der Maximalspeicherkapazität begrenzt und spätestens bei Erreichen dieser Entladung mittels des Gleichspannungswandlers 40 elektrisch vom Bordnetz 20 trennt.

## Beschreibung

Die Erfindung betrifft ein Verfahren, um einen Energiespeicher betreiben zu können, auch wenn beispielsweise die Kühlung ausgefallen ist.

Während bisher in Unterseebooten üblicherweise Blei-Akkumulatoren Verwendung fanden, welche zwar aufgrund der möglichen großen Elementarzelle zwar hohe Ströme, aber nur eine geringe Spannung liefern wurden Blei-Akkumulatoren in Reihe geschaltet, so dass nur üblicherweise ein bis zwei Energiespeicher aus solchen in Reihe geschalteten Blei-Akkumulatoren mit dem Bordnetz verbunden waren. Durch die Entwicklung neuer Akkumulatoren, insbesondere auf Lithium-Basis, werden heutzutage oftmals Stränge, bestehend aus in Modulen, wobei jedes Modul mehrere in Reihe und parallel geschaltete Lithium-Akkumulatoren aufweist, einzeln und direkt über einen Gleichspannungswandler mit dem Bordnetz verbunden. Durch die Gleichspannungswandler ist eine Trennung von Spannung und Ladungszustand möglich, sodass eine beliebige Kombination von Strängen (Energiespeichervorrichtungen) mit dem Bordnetz verbunden werden kann. Dafür ist aber eine zuverlässige Kühlung insbesondere der Gleichspannungswandler notwendig.

Aus der DE 10 2019 216 606 A1 ist ein Batteriemodul bekannt.

Aus der DE 10 2019 216 608 A1 ist ein Batteriemodul mit Überwachung des thermischen Durchgehens von einzelnen Zellen bekannt.

Aus der DE 10 2020 205 327 A1 ist ein Unterseeboot mit einer situationsunabhängigen Spannungsversorgung für ein Strang-Batteriemanagementsystem bekannt.

Aus der DE 10 2019 217 796 A1 ist eine Überbrückung eines Batteriemanagementsystems in einem Unterseeboot im Gefahrenfall bekannt.

Aus der DE 10 2020 203 469 A1 ist ein Verfahren zum Betreiben eines Lithium-Akkumulators an einem auf Bleiakkumulatoren ausgelegtem Bordnetz in einem Unterseeboot bekannt.

Aus der DE 10 2021 200 765 A1 ist streufeldarmes Batteriemodul bekannt.

Aus der DE 10 2021 202 537 A1 ist ein Verfahren zum Betreiben eines Unterseebootes mit einer Brennstoffzelle und einem Akkumulator bekannt.

Aus der DE 10 2021 203 947 A1 ist die Ermittlung des Alterungszustandes eines Energiespeichers an Bord eines Unterseebootes bekannt.

Aus der DE 10 2021 210 447 A1 ist ein Verfahren zum Betreiben eines Bordnetzes eines Unterseebootes bei hohen Lasten bekannt.

Aus der DE 10 2022 208 979 ist ein Verfahren zur Steigerung der Reichweite eines getauchten Unterseebootes bekannt.

Aus der DE 10 2022 205 773 A1 ist ein Unterseeboot mit zwei unterschiedlichen Batteriesystemen und ein Verfahren zum Betreiben bekannt.

Aus der DE 20 2022 102 716 U1 ist ein Unterseeboot mit zwei Umrichtern am Fahrmotor bekannt.

Aus der EP 4 340 113 A1 ist ein Batteriemodul bekannt.

Aus der DE 10 2022 132 635 ist ein Unterseeboot mit einem außerhalb des Druckkörpers angeordnetem Energiespeicher bekannt.

Aus der DE 20 2016 100 559 U1 ist ein Batteriespeichersystem bekannt.

Fällt nun aber die Kühlung aus, so ist dennoch ein sicherer Betrieb wenigstens in einem Notbetrieb sicher zu stellen, um die Besatzung möglichst sicher an die Wasseroberfläche zu bringen.

Aufgabe der Erfindung ist es, einen Betrieb als Sekundärbetrieb (oder Notfallbetrieb) bereitzustellen, der die für einen sicheren Notbetrieb notwendige Energie dennoch zur Verfügung stellt.

Gelöst wird diese Aufgabe durch das Verfahren mit den in Anspruch 1 angegebenen Merkmalen. Vorteilhafte Weiterbildungen ergeben sich aus den Unteransprüchen, der nachfolgenden Beschreibung sowie der Zeichnung.

Das erfindungsgemäße Verfahren dient dem Betreiben eines Unterseebootes. Das Unterseeboot weist ein Bordnetz auf. Das Bordnetz dient zur Verteilung der elektrischen Energie und somit zur Versorgung der Verbraucher. Das Bordnetz kann bevorzugt aus zwei bevorzugt unabhängigen Teilnetzen bestehen. Das Bordnetz weist eine Maximalnetzleistung auf. Die Maximalnetzleistung ist die elektrische Leistung, welche maximal durch das Bordnetz dauerhaft übertragen und somit den Verbrauchern zur dauerhaft Verfügung gestellt werden kann. Das Unterseeboot weist 4 bis 400 Energiespeichervorrichtungen auf. Eine Energiespeichervorrichtung ist im Sinne der Erfindung eine direkt mit dem Bordnetz elektrisch verbindbare Einheit. Insbesondere sind Energiespeichervorrichtung im Sinne der Erfindung galvanische Sekundärelemente oder Akkumulatoren oder Kapazitäten gemeint, insbesondere galvanische Sekundärelement auf Basis von Blei, Nickel, Natrium oder Lithium. Gemeint sein könnten auch Brennstoffzellen. Nicht gemeint sind damit kraftstoffbetriebene Generatoren oder andere Verbrennungsmaschinen, welche nicht elektrische Energie speichern, sondern diese aus der Umwandlung aus chemischer Energie erzeugen. Somit sind alle Energiespeichervorrichtungen unabhängig voneinander mit dem Bordnetz elektrisch verbindbar oder trennbar. Es können also selektiv beliebige ausgewählte Energiespeichervorrichtungen mit dem Bordnetz verbunden sein und die anderen entsprechend getrennt. Bei einer Energiespeichervorrichtung kann es sich bevorzugt um einen sogenannten Strang aus 3 bis 10, bevorzugt 5 bis 8, Modulen handeln, wobei jedes Modul eine Mehrzahl an parallel und/oder in Reihe geschalteten Sekundärelementen, den eigentlichen Akkumulatoren, aufweist. Jede Energiespeichervorrichtung ist über jeweils einen Gleichspannungswandler elektrisch trennbar mit dem Bordnetz verbunden. Hierbei kann die Trennung auch dadurch erfolgen, dass bei einer vorgegebenen Stromflussrichtung von der Energiespeichervorrichtung in das Bordnetz die Spannung auf der Seite der Energiespeichervorrichtung geringer als die Spannung des Bordnetzes gewählt wird oder Halbleiterumrichter keinen Strom von der Energiespeichervorrichtung ins Bordnetz abgeben, aber dennoch mit einer Versorgungsspannung verbunden sind. Dieses ermöglicht, dass keine elektrische Leistung von der Energiespeichervorrichtung an das Bordnetz abgegeben wird, wenn aber die Bordnetzspannung sinkt, beispielsweise weil die Verbraucher mehr Leistung benötigen als bereit gestellt wird, so speist die Energiespeichervorrichtung bei dem verringerten Spannungsniveau ein, wird also durch das Absinken der Bordnetzspannung mit dem Bordnetz verbunden. Dieses bezeichnet man als Hot Standby. Ein solcher Hot Standby wird im Sinne der Erfindung als getrennt verstanden, da kein Strom fließt und somit keine thermische Belastung auftritt. Hierdurch kann zum einen die Anzahl der mit dem Bordnetz verbundenen Energiespeichervorrichtungen gezielt entsprechend der Lastanforderung im Bordnetz gesteuert werden. Zum anderen kann dadurch die Bordnetzspannung unabhängig von der vom Ladezustand der Energiespeichervorrichtung abhängigen Spannung der Energiespeicherborrichtung gewählt beziehungsweise gehalten werden. Jede Energiespeichervorrichtung weist eine Maximalspeicherleistung auf. Die Maximalspeicherleistung ist die höchste elektrische Leistung, welche die Energiespeichervorrichtung dauerhaft abzugeben ausgebildet. Kurzfristige Spitzenleistungen, die die Energiespeichervorrichtung abzugeben vermag, beispielsweise in einem Kurzschlussfall können nicht dauerhaft abgegeben werden und können daher die Maximalspeicherleistung kurzfristig übersteigen. Jede Energiespeichervorrichtung weist eine Maximalspeicherkapazität auf. Die Maximalspeicherkapazität ist die elektrische Kapazität, welche zwischen vollständig geladen und vollständig entladen als tatsächlich zur Verfügung stehende elektrische Kapazität vorgesehen ist. Das Unterseeboot weist eine Kühlvorrichtung für die Energiespeichervorrichtungen und/oder die Gleichspannungswandler auf. Insbesondere kann eine gemeinsame Kühlvorrichtung für mindestens die Hälfte aller Energiespeichervorrichtungen und/oder die Gleichspannungswandler vorgesehen sein, bevorzugt kann eine gemeinsame Kühlvorrichtung für alle Energiespeichervorrichtungen und/oder die Gleichspannungswandler vorgesehen sein. Hierbei kann beispielsweise eine Kühlvorrichtung für die Energiespeichervorrichtungen und die Gleichspannungswandler gemeinsam vorgesehen sein. Alternativ kann eine Kühlvorrichtung für die Energiespeichervorrichtungen und eine weitere Kühlvorrichtung für die Gleichspannungswandler vorgesehen sein. Es kann aber auch eine Kühlvorrichtung für einen Teil der Energiespeichervorrichtungen und der Gleichspannungswandler vorgesehen sein, beispielsweise in einem ersten Batterieraum, und eine weitere Kühlvorrichtung für den anderen Teil der Energiespeichervorrichtungen und der Gleichspannungswandler vorgesehen sein, beispielsweise in einem zweiten Batterieraum. In diesem Fall wird das erfindungsgemäße Verfahren bevorzugt nur für den Teil, beispielsweise den Batterieraum, durchgeführt, in dem die Kühlvorrichtung ausgefallen ist. Gerade die Gleichspannungswandler erzeugen im Betrieb Wärme. Und da diese üblicherweise deutlich kleiner sind als Energiespeichervorrichtungen, kann in einem ungekühlten Zustand damit der Temperaturanstieg gerade im Gleichspannungswandler schneller kritisch werden. Die Kühlvorrichtung kann hierbei seriell geführt werden, wobei der Kühlunterschied dann im Vollastbetrieb durch die stufenweise Erwärmung des Kühlmediums unterschiedlich ist. Dafür ist dieser Aufbau vergleichsweise einfach. Die Kühlvorrichtung kann auch so aufgebaut sein, dass das Kühlmedium parallel durch die elektrischen Bauteile geführt wird. Dieses ist zwar komplexer, führt aber zu einem gleichartigen Kühlergebnis in allen Bauteilen auch bei Volllast. Die Kühlvorrichtung kann beispielsweise so aufgebaut sein, dass das Kühlmittel jeweils zunächst (mit der niedrigsten Temperatur) durch den Gelichspannungswandler und von dort durch die Energiespeichervorrichtung geführt wird. Die Energiespeichervorrichtung weist eine höhere Masse und damit auch eine wesentlich höhere thermische Trägheit auf, sodass durch diese Anordnung ein wirksamer Schutz gerade des kleinen und massearmen Gleichspannungswandlers möglich ist.

Um dieses rein beispielhaft zu verdeutlichen sei angenommen, das Unterseeboot weist 200 Energiespeichervorrichtungen auf. Das Bordnetz sei auf eine Maximalnetzleistung von 100 kW ausgelegt und jede Energiespeichervorrichtung weist eine Maximalspeicherleistung von 1 kW auf. Somit könnten 100 Energiespeichervorrichtungen mit dem Bordnetz verbunden werden und 100 vom Bordnetz getrennt werden, sodass unter Volllast dann 100 Energiespeichervorrichtungen mit maximaler Maximalspeicherleistung das Bordnetz versorgen. Alternativ könnten auch alle 200 Energiespeichervorrichtungen mit dem Bordnetz verbunden werden und dann mit halber Maximalspeicherleistung (0,5 kW) das Bordnetz mit der Maximalnetzleistung von 100 kW versorgen. Wird das Bordnetz nur mit einer Teillast, beispielsweise von 50 kW betrieben, so ergeben sich noch wesentlich mehr Möglichkeiten, die im Bordnetz benötigte Leistung bereitzustellen. Vorteil dieser Bauweise ist, dass somit die mit dem Bordnetz verbundenen Energiespeichervorrichtungen selektiv und ständig neu gewählt werden können, beispielsweise und insbesondere unter Berücksichtigung des jeweiligen Ladezustandes der Energiespeichervorrichtungen. Dieser Regelbetrieb ist aus dem Stand der Technik bekannt.

Das Verfahren weist einen Regelbetrieb und einen Sekundärbetrieb auf. Der Regelbetrieb entspricht dem Betrieb eines solchen, dem Fachmann bekannten Unterseebootes im Normalbetrieb, wobei im Normalbetrieb die Kühlvorrichtung ordnungsgemäß arbeitet. Hierbei muss die Kühlvorrichtung im Normalbetreib natürlich nicht immer im Volllastbetrieb laufen, vielmehr kann die Kühlvorrichtung auch im Normalbetreib heruntergefahren oder gar ausgeschaltet sein, beispielsweise wenn in sehr kalter Umgebung nur minimal Energie benötigt wird. Wesentlich ist, dass im Normalbetrieb die Kühlvorrichtung uneingeschränkt geregelt werden kann. Der Sekundärbetrieb erfolgt, wenn die Kühlvorrichtung nicht voll funktionsfähig, beispielsweise ausgefallen, teilweise ausgefallen oder abgeschaltet ist. Hierzu zählt auch in der Kühlleistung beeinträchtig, entweder ungewollt durch einen Defekt wie auch absichtlich reduziert, insbesondere zur Geräuschminimierung. Der Sekundärbetrieb stellt somit die erfindungsgemäße Abweichung vom Regelbetrieb nach dem Stand der Technik dar.

Das Verfahren begrenzt im Sekundärbetrieb die aktuelle Leistung des Bordnetzes auf einen vorgegebenen Maximalleistungswert, beispielsweise und insbesondere kleiner als 50 % der Maximalnetzleistung, bevorzugt maximal 30 % der Maximalnetzleistung. Insbesondere liegt der Maximalleistungswert zwischen 20 % und 30 % der Maximalnetzleistung. Dieses beschränkt zwar die maximale Leistung, welche ein Verbraucher beziehen kann, also beispielswiese und insbesondere ein Fahrmotor und für diesen somit die maximal erreichbare Höchstgeschwindigkeit. Aber dadurch wird ermöglich überhaupt eine Leistung und damit beispielswiese und insbesondere einen Vortrieb zu erzeugen, um das Unterseeboot beispielsweise kontrolliert zum Auftauchen bringen zu können. Diese Begrenzung ist unerwünscht, muss aber für den Sekundärbetrieb in Kauf genommen werden. Fällt die aktuelle Leistung des Bordnetzes höher als der Maximalleistungswert, beispielsweise höher als 30 % der Maximalnetzleistung, aus, ist eine ordnungsgemäße Funktion des Sekundärbetriebs nicht mehr gewährleistet. Da in einem Unterseeboot üblicherweise Degradationskonzepte vorliegen, ist die Priorisierung der Verbraucher und deren jeweilige Drosselung üblicherweise geregelt, sodass auf diese Prozeduren zur Reduktion der aktuellen Leistung zurückgegriffen werden kann. Das Verfahren begrenzt im Sekundärbetrieb die Leistung der Energiespeichervorrichtungen auf einen Maximalspeicherwert, beispielsweise und insbesondere maximal 60 % der Maximalspeicherleistung. Dieses begrenzt insbesondere den durch den Gleichspannungswandler fließenden Strom und begrenzt damit die Aufheizrate an dem Gleichspannungswandler, welcher thermisch im Sekundärbetrieb am Meisten belastet ist. Das Verfahren sorgt dafür, dass einerseits die anfallende Netzbelastung auf nur ausgewählte Energiespeichervorrichtungen anfällt. Nicht ausgewählte Energiespeichervorrichtungen sind in diesem Zeitrahmen dann stromlos. Zusätzlich sorgt das Verfahren dafür, dass die anfallende Netzbelastung zyklisch zwischen allen verfügbaren Energiespeichervorrichtungen durchkommutiert wird. Dafür begrenzt das Verfahren im Sekundärbetrieb die maximale Entladung jeder Energiespeichervorrichtung beispielsweise auf maximal 10 % der Maximalspeicherkapazität. Spätestens bei Erreichen dieser Entladung wird mittels des Gleichspannungswandlers die Energiespeichervorrichtung elektrisch vom Bordnetz trennt. Durch die zyklische Kommutierung wird die Zeit begrenzt, in welcher der Gleichspannungswandler durch den durch diesen hindurchfließenden Strom aufgeheizt wird. Durch die reduzierte Leistung in Kombination mit der zyklischen Kommutierung wird somit die Gesamtwärmemenge, die in den Gleichspannungswandler eingebracht wird, begrenzt, sodass auch ohne aktive Kühlung ein Weiterbetrieb möglich ist. Durch die stromlose Phase kann dann der Gleichspannungswandler rein passiv Wärme an die Umgebung abgeben und so sich wieder abkühlen.

Besonders bevorzugt wird jeweils nur eine erste Teilgruppe der Energiespeichervorrichtungen über jeweils einen Gleichspannungswandler für einen ersten Zeitraum betrieben. Eine zweite Teilgruppe der Energiespeichervorrichtungen speist währenddessen keine Energie über den Gleichspannungswandler ein. Somit erwärmen sich die Gleichspannungswandler der ersten Teilgruppe, während sich alle anderen Gleichspannungswandler abkühlen können. Nach dem ersten Zeitraum wird die erste Teilgruppe getrennt, damit sich die Gleichspannungswandler der ersten Teilgruppe wieder abkühlen können. Die zweite Teilgruppe wird über jeweils einen Gleichspannungswandler für einen zweiten Zeitraum betrieben. Damit erwärmen sich nun die Gleichspannungswandler der zweiten Teilgruppe. Natürlich kann es auch eine dritte und weitere Teilgruppen geben. Wesentlich ist, dass jeder Gleichspannungswandler nur zeitweise betrieben wird und zeitweise sich abkühlen kann.

Faktisch ergibt sich somit im Sekundärbetreib ein Durchrotieren der Energiespeichervorrichtungen, die mit dem Bordnetz verbunden sind und damit auch der Gleichspannungswandler. Somit kann im Sekundärbetrieb eine geringere elektrische Leistung bereitgestellt werden, aber es kann eben noch zuverlässig eine elektrische Leistung zur Verfügung gestellt werden, um beispielswiese ein sicheres und kontrolliertes Auftauchen zu ermöglichen.

In einer weiteren Ausführungsform der Erfindung begrenzt das Verfahren im Sekundärbetrieb die Leistung der Energiespeichervorrichtungen auf maximal 60 % der Maximalspeicherleistung für höchstens 30 min. Soll die Energiespeichervorrichtung für länger als 30 min mit dem Bordnetz verbunden bleiben, so begrenzt das Verfahren für Zeiten über 30 min im Sekundärbetrieb die Leistung der Energiespeichervorrichtungen auf maximal 20 % der Maximalspeicherleistung. Je stärker der Stromfluss durch den Gleichspannungswandler ist (je höher die Leistung ist), umso stärker heizt der Gleichspannungswandler auf. Bei hohen Leistungen bis maximal 60 % ist daher nur ein kurzfristiger Betreib bis maximal 30 min möglich, danach muss ein Rotieren über andere Energiespeichervorrichtungen erfolgen. Auch wenn dieses eine größere Anzahl an Schaltvorgängen aufweist, ergibt sich durch den schnelleren Temperaturanstieg und die danach wesentlich längere Abkühlphase insgesamt eine gute langfristige Temperaturstabilität ohne ein zu schnelles Ansteigen der Temperatur über mehrere Zyklen. Auf der anderen Seite kann insbesondere bei sehr kleinen Leistungen, welche im Bordnetz abgefragt werden, auch ein längerer Betrieb mit geringerer Leistung der einzelnen Energiespeichervorrichtungen sinnvoll sein.

In einer weiteren Ausführungsform der Erfindung wird eine Energiespeichervorrichtung, welche mittels des Gleichspannungswandlers elektrisch vom Bordnetz getrennt wurde, erst nach einer Wartezeit erneut mittels des Gleichspannungswandlers elektrisch mit dem Bordnetz verbunden. Dieses soll ein ausreichendes Abkühlen insbesondere des Gleichspannungswandlers ermöglichen. Um dieses zu gewährleisten wird die Wartezeit mindestens gleich der vorangegangenen Entladezeit vor dem Trennen vom Bordnetz gewählt. Bevorzugt wird die Wartezeit mindestens dreimal so lang wie die vorangegangene Entladezeit vor dem Trennen vom Bordnetz gewählt.

In einer weiteren Ausführungsform der Erfindung begrenzt für den Beginn des Sekundärbetriebs das Verfahren im Sekundärbetrieb die maximale Entladung jeder Energiespeichervorrichtung auf einen maximalen Teilentladungswert, Der maximale Teilentladungswert beträgt beispielsweise und bevorzugt maximal 20 %, besonders bevorzugt auf 10 % der Maximalspeicherleistung. Dieses erfolgt bevorzugt, wenn ein fest definiertes Temperaturniveau aller Energiespeichervorrichtungen überschritten worden ist. Spätestens bei Erreichen einer Entladung in Höhe des maximalen Teilentladungswerts wird mittels des Gleichspannungswandlers die Energiespeichervorrichtung elektrisch vom Bordnetz getrennt. Dieses berücksichtigt, dass durch einen möglichen vorhergehenden Betrieb mit höheren fließenden Strömen der Gleichspannungswandler bereits auf einem angehobenen Temperaturniveau ist, welches jedoch durch eine laufende Kühlung als begrenzt anzusehen ist. Alternativ oder zusätzlich wird hiermit einer weiteren Aufheizung der Energiespeichervorrichtungen nach überschreiten eines definierten Temperaturniveaus entgegengewirkt.

In einer weiteren Ausführungsform der Erfindung erfolgt der Sekundärbetrieb, sobald die Kühlvorrichtung ausfällt oder zur Reduktion der akustischen Signatur abgestellt wird. Während der erste Fall, der (ungewollte) Ausfall ungeplant ist und in einem solchen Notfall eine notwendige Energiesicherheit ermöglicht dient der zweite Fall dazu die akustische Signatur zu minimieren und dadurch die Entdeckungswahrscheinlichkeit zu reduzieren und damit die Überlebenswahrscheinlichkeit zu erhöhen. In einem Fall, in dem die akustische Signatur derart gering ist, dass diese durch das Abschalten einer Kühlvorrichtung und dadurch der Vermeidung der Bewegung des Kühlfluids reduziert wird, befindet sich das Unterseeboot üblicherweise in einem Zustand mit minimalem Energieverbrauch, insbesondere bei extrem geringer Geschwindigkeit. Daher kann in einem solchen auch als Schleichfahrtbetrieb bezeichneten Zustand der Sekundärbetrieb verwendet werden, um die akustische Signatur weiter zu reduzieren.

In einer weiteren Ausführungsform der Erfindung begrenzt das Verfahren im Sekundärbetrieb in Abhängigkeit von der Umgebungstemperatur innerhalb des Unterseebootes die Leistung der Energiespeichervorrichtungen unter maximal 60 % der Maximalspeicherleistung. Beispielswiese kann der oben genannte Werte für eine Temperatur von 10 bis 30 °C verwendet werden. Bei Temperaturen über 40 °C im Inneren des Unterseeboote kann dann das Verfahren beispielsweise die Leistung der Energiespeichervorrichtungen unter den vorgegebenen Maximalleistungswert, beispielsweise maximal 30 % der Maximalspeicherleistung, und die Kommutierungsfrequenz für die Belastung der Energiespeichervorrichtungen erhöhen. Hierdurch wird die geringere Wärmeabgabe des Gelichspannungswandlers im ausgeschalteten Zustand berücksichtigt und so eine längere Betriebszeit im Sekundärbetrieb ohne dauerhafte Beschädigung des Unterseebootes ermöglicht.

In einer weiteren Ausführungsform der Erfindung kann in einer ersten Phase der vorgegebenen Maximalleistungswert kurzfristig dadurch gesteigert werden, dass kurzfristig mehr als 50 % aller Energiespeichervorrichtungen mit dem Maximalspeicherwert einspeichern, gefolgt von einer zweiten Phase, in der nur die nicht in der ersten Phase aktiven Energiespeichervorrichtungen einspeisen, also entsprechend weniger Energie zur Verfügung steht, also ein deutlich verringerter Maximalleistungswert zur Verfügung steht. Letztendlich wird damit über die beiden Phasen zusammen der Maximalleistungswert im Mittel erfindungsgemäß begrenzt. Dieses ermöglicht eine kurzfristige erhöhte Leistung, beispielsweise um eine Leistungsreserve, beispielsweise für den Antrieb bereitstellen zu können. Danach steht deutlich weniger Leistung zur Verfügung, um ein Abkühlen zu ermöglichen.

Nachfolgend ist das erfindungsgemäße Verfahren anhand eines in der Zeichnung dargestellten Ausführungsbeispiels näher erläutert.

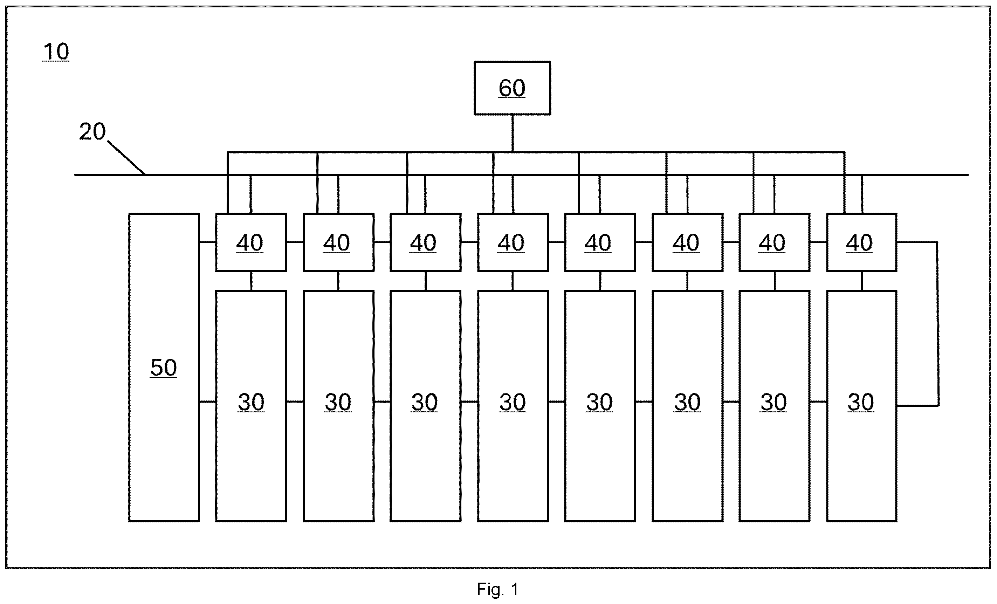

Fig. 1 Unterseeboot mit erfindungsgemäßem betreibbaren Bordnetz

In Fig. 1 ist ein Unterseeboot 10 gezeigt. Das Unterseeboot 10 weist ein Bordnetz 20 auf, an dem die nicht gezeigten Verbraucher, beispielsweise und insbesondere der Fahrmotor (als einer der leistungsstärksten Verbraucher) hängen. Um die elektrische Leistung in das Bordnetz 20 einzuspeisen weist das Unterseeboot 10 im gezeigten Beispiel acht Energiespeichervorrichtungen 30 auf, die reale Zahl wird üblicherweise eher bei 50 bis 100 liegen. Der innere Aufbau der Energiespeichervorrichtungen 30 ist für das erfindungsgemäße Verfahren jedoch irrelevant. Die Energiespeichervorrichtungen 30 sind üblicherweise als Stränge, bestehend aus 3 bis 10 Modulen ausgeführt, wobei die Module eine größere Anzahl an parallel und in Reihe geschalteten Sekundärelementen, den eigentlichen Akkumulatoren, aufweisen. Die Energiespeichervorrichtungen 30 sind über Gleichspannungswandler 40 mit dem Bordnetz 20 verbunden, sodass diese in einfacher Weise elektrisch mit dem Bordnetz 20 verbunden oder elektrisch vom Bordnetz 20 getrennt werden können und zwar einzeln, selektiv und unabhängig von der durch den Ladezustand beeinflussten Spannung der Energiespeichervorrichtungen 30. Um die Energiespeichervorrichtungen 30 aber vor allem auch die Gelichspannungswandler 40 im Regelbetrieb vor Überhitzung zu schützen, weist das Unterseeboot 10 eine Kühlvorrichtung 50, die im gezeigten Beispiel zur Vereinfachung als einfache Ringleitung durch alle Energiespeichervorrichtungen 30 und alle Gleichspannungswandler 40 ausgeführt ist. Im Regelbetrieb kann nun das Schiffs-Batteriemanagementsystem 60 jede beliebige Energiespeichervorrichtung 30 mit dem Bordnetz 20 verbinden oder trennen, indem das Schiffs-Batteriemanagementsystem 60 die entsprechenden Gleichspannungswandler 40 direkt (oder üblicherweise indirekt über ein nicht dargestelltes Strang-Batteriemanagementsystem) ansteuert. Dadurch wird im Regelbetrieb jeweils die vom Bordnetz 20 benötigte elektrische Leistung zur Verfügung gestellt. Die Auswahl der Energiespeichervorrichtungen 30 kann somit beispielsweise in Abhängigkeit der Ladezustände aller Energiespeichervorrichtungen 30 gewählt werden. Durch die Kühlung ist eine zeitliche Limitierung des Entladens einzelner Energiespeichervorrichtungen 30 nicht gegeben, eine Überhitzung wird durch die aktive Kühlung verhindert.

Fällt nun aber die Kühlvorrichtung 50 aus oder soll diese zur Minimierung der akustischen Signatur abgestellt werde, ist das Unterseeboot 10 nicht mehr im Regelbetrieb betreibbar, da es zu einer Überhitzung insbesondere der Gleichspannungswandler 40 kommen würde. Daher wird das Unterseeboot 10 nun im erfindungsgemäßen Sekundärbetrieb betrieben.

Das Schiffs-Batteriemanagementsystem 60 wählt beispielsweise im gezeigten Beispiel zwei der acht Energiespeichervorrichtungen 30 aus und verbindet diese über deren Gleichspannungswandler 40 mit dem Bordnetz 20. Die anderen sechs Energiespeichervorrichtungen 30 werden vom Bordnetz getrennt. Die Leistung der beiden verbundenen Energiespeichervorrichtungen 30 wird auf beispielsweise 20 % der Maximalspeicherleistung begrenzt. Damit ist die Maximalnetzleistung beispielsweise auf 10 % begrenzt, wenn man davon ausgeht, dass die Summe aller Maximalspeicherleistungen dem Doppelten der Maximalnetzleistung entspricht, also die Hälfte aller Energiespeichervorrichtungen 30 ausreicht die volle Maximalnetzleistung dem Bordnetz 20 bereitzustellen, was einer vollen Redundanz entsprechen würde. Diese beiden Energiespeichervorrichten werden beispielsweise um 5 % ihrer Maximalspeicherkapazität entladen. Danach werden diese beiden Energiespeichervorrichtungen 30 vom Bordnetz getrennt und zwei andere Energiespeichervorrichtungen 30 mit dem Bordnetz verbunden. Dadurch können sich die Gleichspannungswandler 40 der zuerst verbundenen Energiespeichervorrichtungen 30 nun abkühlen. Die nun im zweiten Schritt mit dem Bordnetz 20 verbundenen Energiespeichervorrichtungen 30 werden beispielsweise ebenfalls auf 20 % der Maximalspeicherleistung begrenzt. Diese und alle im folgenden mit dem Bordnetz 20 verbundenen Energiespeichervorrichtungen 30 werden beispielsweise um 10% ihrer Maximalspeicherkapazität entladen, da deren Gleichspannungswandler 40 zuvor nicht belastet waren und somit Zeit hatten, auszukühlen. So kann das Unterseeboot mit einer Maximalnetzleistung von 10 % betrieben werden, was beispielsweise keine hohe Fahrtgeschwindigkeit erlaubt, aber wenigstens ein sicheres Auftauchen ermöglicht.

### Bezugszeichen

- 10: Unterseeboot
- 20: Bordnetz
- 30: Energiespeichervorrichtung
- 40: Gleichspannungswandler
- 50: Kühlvorrichtung
- 60: Schiffs-Batteriemanagementsystem

## Patentansprüche

1. Verfahren zum Betreiben eines Unterseebootes (10), wobei das Unterseeboot (10) ein Bordnetz (20) aufweist, wobei das Bordnetz (20) eine Maximalnetzleistung aufweist, wobei das Unterseeboot (10) 4 bis 400 Energiespeichervorrichtungen (30) aufweist, wobei jede Energiespeichervorrichtung (30) über jeweils einen Gleichspannungswandler (40) elektrisch trennbar mit dem Bordnetz (20) verbunden ist, wobei jede Energiespeichervorrichtung (30) eine Maximalspeicherleistung aufweist, wobei jede Energiespeichervorrichtung (30) eine Maximalspeicherkapazität aufweist, wobei das Unterseeboot (10) eine Kühlvorrichtung (50) für die Energiespeichervorrichtungen (30) und/oder die Gleichspannungswandler (40) aufweist, wobei das Verfahren einen Regelbetrieb und einen Sekundärbetrieb aufweist, wobei der Sekundärbetrieb erfolgt, wenn die Kühlvorrichtung (50) nicht voll funktionsfähig, beispielsweise ausgefallen, teilweise ausgefallen oder abgeschaltet, ist, wobei das Verfahren im Sekundärbetrieb die Leistung des Bordnetzes (20) auf einen vorgegebenen Maximalleistungswert, beispielsweise maximal 30 %, der Maximalleistung begrenzt, wobei das Verfahren im Sekundärbetrieb die Leistung der Energiespeichervorrichtungen (30) auf einen Maximalspeicherwert, beispielsweise maximal 60 % der Maximalspeicherleistung, begrenzt.

2. Verfahren nach Anspruch 1, **dadurch gekennzeichnet, dass** jeweils nur eine erste Teilgruppe der Energiespeichervorrichtungen (30) über jeweils einen Gleichspannungswandler (40) für einen ersten Zeitraum betrieben wird und eine zweite Teilgruppe der Energiespeichervorrichtungen (30) keine Energie über den Gleichspannungswandler (40) einspeist, wobei nach dem ersten Zeitraum die erste Teilgruppe getrennt wird und sich die Gleichspannungswandler (40) der ersten Teilgruppe abkühlen können und die zweite Teilgruppe über jeweils einen Gleichspannungswandler (40) für einen zweiten Zeitraum betrieben wird.

3. Verfahren nach einem der vorstehenden Ansprüche, **dadurch gekennzeichnet, dass** das Verfahren im Sekundärbetrieb die Leistung der Energiespeichervorrichtungen (30) auf maximal 60 % der Maximalspeicherleistung für höchstens 30 min begrenzt, wobei für Zeiten über 30 min das Verfahren im Sekundärbetrieb die Leistung der Energiespeichervorrichtungen (30) auf maximal 20 % der Maximalspeicherleistung begrenzt.

4. Verfahren nach einem der vorstehenden Ansprüche, **dadurch gekennzeichnet, dass** das Verfahren im Sekundärbetrieb die maximale Entladung jeder Energiespeichervorrichtung (30) auf einen maximalen Teilentladungswert, beispielsweise maximal 10 % der Maximalspeicherkapazität, begrenzt und spätestens bei Erreichen einer Entladung in Höhe des maximalen Teilentladungswerts mittels des Gleichspannungswandlers (40) elektrisch vom Bordnetz (20) trennt.

5. Verfahren nach einem der vorstehenden Ansprüche, **dadurch gekennzeichnet, dass** eine Energiespeichervorrichtung (30), welche mittels des Gleichspannungswandlers (40) elektrisch vom Bordnetz (20) getrennt wurde, erst nach einer Wartezeit erneut mittels des Gleichspannungswandlers (40) elektrisch mit dem Bordnetz (20) verbunden wird, wobei die Wartezeit mindestens gleich der vorangegangenen Entladezeit vor dem Trennen vom Bordnetz (20) gewählt wird.

6. Verfahren nach einem der vorstehenden Ansprüche, **dadurch gekennzeichnet, dass** für den Beginn des Sekundärbetriebs das Verfahren im Sekundärbetrieb die maximale Entladung jeder Energiespeichervorrichtung (30) auf maximal 20 % der Maximalspeicherleistung begrenzt und spätestens bei Erreichen dieser Entladung mittels des Gleichspannungswandlers (40) elektrisch vom Bordnetz (20) trennt.

7. Verfahren nach einem der vorstehenden Ansprüche, **dadurch gekennzeichnet, dass** der Sekundärbetrieb erfolgt, sobald die Kühlvorrichtung (50) ausfällt oder zur Reduktion der akustischen Signatur abgestellt wird.

8. Verfahren nach einem der vorstehenden Ansprüche, **dadurch gekennzeichnet, dass** im Sekundärbetrieb in Abhängigkeit von der Umgebungstemperatur innerhalb des Unterseebootes (10) die Leistung der Energiespeichervorrichtungen (30) unter maximal 60 % der Maximalspeicherleistung begrenzt wird.
